# FASCICULE DE BREVET EUROPEEN

(11) **EP 4 267 420 B1**
(45) Date de publication et mention de la délivrance du brevet: **06.11.2024**
(21) Numéro de dépôt: 21836481.8
(22) Date de dépôt: 13.12.2021
(51) Int. Cl.: B60K 26/02, B60K 26/04

(54) **DISPOSITIF D'ACCÉLÉRATION D'UN VÉHICULE**
BESCHLEUNIGUNGSEINRICHTUNG EINES FAHRZEUGS
ACCELERATION DEVICE OF A VEHICLE

(30) Priorité: 23.12.2020 FR 2014056
(43) Date de publication de la demande: 01.11.2023
(73) Titulaire: TLA Enterprises, 25220 Roche-lez-Beaupre (FR)
(72) Inventeur: CUNIN, Mickaël, 25220 ROCHE-LEZ-BEAUPRE (FR); COTTIN, Philippe, 25170 PELOUSEY (FR)
(74) Mandataire: Oudin, Stéphane
(86) Numéro de dépôt international: PCT/EP2021/085398
(87) Numéro de publication internationale: WO 2022/135990

(56) Documents cités:
- FR-A1- 2 689 461
- FR-A1- 2 779 103
- US-A1- 2016 052 390

## Description

Le domaine technique concerne celui des dispositifs de commande de l'accélération d'un véhicule, pouvant être actionné par un membre supérieur d'un utilisateur, notamment la main. Le domaine technique concerne notamment celui des dispositifs de commande de l'accélération d'un véhicule au volant. Cette invention s'applique notamment aussi à des véhicules roulants, destinés à être conduits de manière régulière par une personne handicapée sur un ou deux membres inférieurs telle qu'une personne paraplégique, ou amputée d'une jambe.

Il est connu des aménagements de véhicules pour permettre à des personnes handicapées de conduire. Ainsi, pour une personne handicapée sur un ou deux membres inférieurs telle qu'une personne paraplégique, ou amputée d'une jambe incapable d'utiliser les pédales d'une voiture, il est connu de proposer une boite automatique pour ne pas avoir à appuyer sur la pédale d'embrayage, mais aussi de prévoir des moyens de commande de l'accélération et/ou éventuellement du freinage pouvant être actionnés à la main, ou tout du moins avec au moins un membre supérieur.

Il est connu de tels moyens de commande de l'accélération et/ou éventuellement du freinage d'un véhicule mettant en oeuvre des systèmes mécaniques de câbles et/ou de tringlerie reliés d'une part au carburateur et d'autre part à un cercle placé derrière le volant dudit véhicule, parallèlement à celui-ci. Des moyens de rappel élastiques sont connectés au cercle, un déplacement du cercle pour le rapprocher du volant permet par exemple d'accélérer, et un relâchement permet éventuellement de freiner. Le déplacement du cercle se fait par une pression des doigts à l'encontre de la force de rappel des moyens de rappel élastiques. Il en résulte un mouvement d'une pièce mobile au niveau du carburateur. Le déplacement dudit cercle est d'environ 20 millimètres.

Ces moyens sont inconfortables car ils nécessitent une pression continue et forte pour conduire et faire avancer le véhicule, et ils sont réservés à un public averti.

Un autre inconvénient de ces moyens sont qu'ils proposent soit une commande uniquement à la main, auquel cas le véhicule ne présente plus de pédales et l'utilisation du véhicule par une personne valide est difficile, soit le véhicule présente toujours un jeu de pédales opérationnel en plus d'une commande à la main. Dans ce dernier cas, un utilisateur handicapé peut par un mouvement involontaire des jambes actionner ces pédales et accélérer sans le vouloir.

Il est connu aussi des moyens de commande comportant des moyens d'assistance et de démultiplication utilisant notamment des capteurs électroniques et/ou des moteurs électriques.

Ces moyens d'assistance et de démultiplication permettent de réduire l'effort continu à exercer pour accélérer, mais les autres inconvénients cités précédemment sont toujours présents.

Pour y remédier, il est connu, sur les véhicules récents comportant une gestion électronique de l'accélération, d'utiliser un dispositif d'accélération électronique complémentaire, notamment au volant, relié à l'électronique du véhicule et pouvant être actionné avec un membre supérieur d'un utilisateur notamment une main.

Pour rappel, un véhicule récent comporte de manière connue un pédalier d'appui au pied. Ce pédalier comporte un support, une pédale d'appui au pied pivotant autour d'un arbre par rapport audit support, des moyens de rappel élastiques de ladite pédale à une position initiale, et des moyens de détection de l'appui et de la position de la pédale d'appui au pied par rapport audit support.

Ce pédalier émet un signal sous la forme d'une tension électrique de l'ordre de quelques volts qui est transmis par des moyens de transmission dudit signal à une unité de commande électronique du moteur qui commande l'accélération dudit moteur, appelé aussi communément ECU, qui est l'acronyme de la traduction anglaise « Electronic Control Unit ». Cette ECU commande des moyens de gestion du moteur, notamment des moyens de gestion de la quantité de carburant et d'air injecté dans le moteur, comme un carburateur électronique, et notamment des moyens de gestion des rapports de vitesse du moteur comme une boite de vitesse automatique.

Ces moyens de détection de l'appui et de la position de la pédale d'appui au pied par rapport audit support peuvent être par exemple de manière connue un capteur de position de pédale d'accélérateur, appelé aussi communément capteur APP, qui est l'acronyme de la traduction anglaise Accelerator Pedal Position. Ce capteur comporte un élément conducteur qui se déplace sur une résistance, cet élément étant mécaniquement lié à l'arbre du capteur. En fait, un capteur APP est un potentiomètre, qui fait correspondre une résistance particulière à un angle de pivotement de la pédale autour de l'axe du support donnée. En alimentant électriquement le capteur APP avec une tension fixe prédéterminée, par exemple 5 volts, on convertit l'enfoncement de la pédale en une tension proportionnelle comprise entre 0.15 et 4.7 volts. La tension fixe prédéterminée sur les véhicules récents est même en dessous de 1 volt.

L'ECU envoie ainsi par des moyens de transmission d'une tension une tension fixe prédéterminée et reçoit en retour par les moyens de transmission du signal une tension proportionnelle qui est comparée avec une courbe de réponse à une tension mesurée par le capteur APP, pour gérer en conséquence le régime moteur et éventuellement les rapports de vitesse. L'ECU en suivant cette courbe peut répondre de manière souple à toute action de l'utilisateur sur le pédalier. Cette courbe de réponse est établie par le constructeur du véhicule.

Les dispositifs manuels d'accélération électronique reliés à l'électronique du véhicule de l'art antérieur peuvent se présenter sous la forme de moyens de commande au volant, par exemple un cercle décrit plus haut. Le déplacement de de ce cercle en translation actionne un capteur électronique qui envoie un signal. Ce signal est converti en une tension continue par une interface électronique lisible par l'ECU. L'alimentation électrique de ce dispositif se fait par un branchement sur l'alimentation du véhicule en courant continu, habituellement en 12 ou 24 volts. L'interface électronique envoie un signal cherchant à reproduire le plus fidèlement possible la trajectoire du signal présent sur la courbe de réponse de l'ECU, pour faire croire à l'ECU que le signal vient du pédalier.

Un inconvénient de ces dispositifs vient du fait que son fonctionnement manuel nécessite une force de rappel faible. En conséquence, le signal envoyé à l'ECU n'est pas constant. Il en résulte des à-coups pouvant rendre problématique la conduite. C'est notamment le cas pour des manoeuvres ou des déplacements dans des courbes et des rond points, ainsi que sur des routes sinueuses ou accidentées.

Ces à-coups provoquent de plus une surconsommation de carburant du fait d'une gestion non optimisée de l'accélération telle que l'avait prévu le constructeur.

Un autre inconvénient de ces dispositifs tient dans le fait qu'ils doivent être alimentés après démarrage du véhicule, alors que les derniers véhicules ne proposent pas simplement un accès à une tension stable. Il est nécessaire de ponctionner des équipements périphériques, comme les autoradios, rendant le branchement des dispositifs plus complexe. De plus, l'alimentation par l'ECU en dessous de 1 volt sur les derniers véhicules rend complexe le renvoi d'un signal proportionnel faible.

Un autre inconvénient tient du fait que les courbes de réponse de l'ECU dépendent des véhicules. Il est donc nécessaire pour installer un dispositif de commande de mesurer le signal de réponse du pédalier pour essayer de reproduire au mieux ledit signal de réponse. Il en résulte un signal suivant non pas une courbe, mais une succession de points mesurés formant une trajectoire formée d'une succession de segments. Le signal transmis à l'ECU est donc erroné, ce qui est particulièrement vrai à basse vitesse et se voit particulièrement dans la gestion des passages des rapports de vitesse par la boite de vitesse automatique.

La voiture ne répondra alors pas correctement aux commandes de l'utilisateur, ce qui nuit à la sécurité du conducteur et celle des autres. Le confort de conduite s'en trouve également dégradé.

L'ECU peut également considérer ce signal erroné comme une défaillance véhicule, et allumer des voyants sur le tableau de bord de manière intempestive, ou passer le moteur en mode dégradé, provoquant une usure plus rapide dudit moteur.

En fait, le principe de fonctionnement d'un dispositif actuel sur un véhicule récent est de reproduire le signal de sortie d'une pédale d'accélérateur, et de l'envoyer à l'ECU via une interface électronique complexe, mais sous une forme dégradée.

Des dispositifs d'accélération sont connus des documents FR 2 689 461 A1 et US 2016/052390 A1.

L'objectif de l'invention est donc de proposer une alternative aux dispositifs d'accélération électronique complémentaires pouvant être actionnés avec un membre supérieur d'un utilisateur existant.

Un autre objectif de l'invention est de proposer un dispositif d'accélération simple à installer, robuste, économique, et ne présentant pas les inconvénients de l'art antérieur.

Un autre objectif est de proposer un ensemble d'accélération d'un véhicule, polyvalent, pouvant être actionné par un utilisateur avec ses membres inférieurs, ou avec ses membres supérieurs.

Enfin, un objectif de l'invention est de proposer un véhicule équipé d'un tel ensemble comportant un tel dispositif.

A cet effet, l'invention concerne un dispositif d'accélération d'un véhicule équipé d'un système d'accélération comportant un pédalier destiné à être actionné avec un membre inférieur d'un utilisateur, caractérisé par le fait que ledit dispositif d'accélération comporte un autre pédalier et des moyens de commande dudit pédalier par un membre supérieur d'un utilisateur dudit dispositif d'accélération.

L'utilisation d'un pédalier pour réaliser le dispositif d'accélération permet que le signal transmis soit facilement lisible par l'unité de commande électronique du véhicule sur lequel le dispositif est destiné à être monté. Cela permet aussi de réduire les coûts de fabrication du dispositif en utilisant un pédalier déjà existant.

Avantageusement, les moyens de commande du dispositif d'accélération sont des moyens de commande mécanique au volant.

Avantageusement encore, les moyens de commande au volant comportent des moyens de transmission mécanique d'un effort exercé par un membre supérieur d'un utilisateur au pédalier dudit dispositif.

Avantageusement, ces moyens de transmission mécanique d'un effort comportent un câble comportant des moyens d'amortissement.

L'invention concerne également un ensemble d'accélération d'un véhicule équipé d'un système d'accélération comportant un pédalier destiné à être actionné avec un membre inférieur d'un utilisateur, ledit ensemble d'accélération comportant le dispositif d'accélération décrit ci avant, ledit pédalier dudit véhicule, et des moyens de transmission du signal des pédaliers à une unité de commande électronique de l'accélération du système d'accélération dudit véhicule.

Cet ensemble peut ainsi être actionné par un utilisateur avec ses membres inférieurs ou avec ses membres supérieurs.

Avantageusement les moyens de transmission du signal des pédaliers comportent un bloc commutateur configuré pour transmettre un signal d'uniquement un seul pédalier.

On peut ainsi envoyer facilement le signal de l'un ou l'autre pédalier à l'unité de commande électronique de l'accélération d'un véhicule équipé de l'ensemble d'accélération.

Cela permet ainsi de proposer une première configuration selon laquelle l'accélération est commandée par le pédalier du véhicule destiné à être actionné avec un membre inférieur d'un utilisateur, et dans laquelle le dispositif d'accélération n'est pas opérationnel. On propose aussi une seconde configuration selon laquelle, inversement, l'accélération est commandée par le dispositif d'accélération, et dans laquelle le pédalier du véhicule destiné à être actionné avec un membre inférieur d'un utilisateur n'est pas opérationnel.

L'ensemble d'accélération est alors polyvalent, et présente ainsi une première configuration permettant une utilisation par une personne valide, et une seconde configuration permettant une utilisation par une personne handicapée sur un ou deux membres inférieurs telle qu'une personne paraplégique, ou amputée d'une jambe.

Avantageusement, les deux pédaliers de l'ensemble d'accélération, c'est-à-dire le pédalier du véhicule destiné être actionné avec un membre inférieur d'un utilisateur et le pédalier du dispositif d'accélération, comportent des supports identiques, au moins une partie de pédales d'appui pivotant autour d'un arbre par rapport audit support identiques, et des moyens identiques de détection de l'appui et de la position de la pédale d'appui au pied par rapport audit support.

En fait, les deux pédaliers, sont identiques, à l'exception du tarage des moyens de rappel élastiques des pédaliers. Les signaux des deux pédaliers sont ainsi sous un format identique, ce qui évite une lecture erronée. De plus, le cout de l'ensemble est réduit car les pédaliers sont des éléments standards, fabriqués par les constructeurs automobiles. Ces pédaliers sont particulièrement adaptés au véhicule sur lequel l'ensemble d'accélération est monté.

Un autre avantage d'utiliser des pédaliers identiques est d'assurer un fonctionnement tel que prévu par les constructeurs du véhicule. On évite ainsi un mode dégradé pouvant augmenter la consommation de carburant.

Le tarage du pédalier du dispositif d'accélération est configuré pour rendre son usage confortable par une action par un membre supérieure d'un utilisateur, notamment une main.

L'invention concerne enfin un véhicule équipé d'un système d'accélération comportant un pédalier destiné à être actionné avec un membre inférieur d'un utilisateur. Ce véhicule comporte un ensemble d'accélération tel que décrit précédemment, ledit ensemble d'accélération comportant un dispositif d'accélération tel que décrit précédemment.

Un tel véhicule est plus confortable à conduire pour une personne handicapée sur un ou deux membres inférieurs telle qu'une personne paraplégique, ou amputée d'une jambe tout en ne nécessitant que peu de modifications irréversibles et peu d'investissement. Un tel véhicule est de plus polyvalent car il permet aussi à une personne valide une conduite normale avec les pieds.

D'autre buts et avantages de la présente invention apparaîtront au cours de la description qui va suivre se référant aux dessins ci-joints illustrant des exemples de réalisation et dans lesquels :
[Fig.1] est une en perspective partielle d'un volant équipé d'un dispositif d'accélération selon l'invention, présentant notamment des moyens de commande au volant dudit dispositif.
[Fig.2] est une vue schématique semi éclatée partielle en perspective d'une partie du dispositif d'accélération selon l'invention, présentant notamment des moyens de commande au volant et un pédalier dudit dispositif.
[Fig.3] est une vue schématique d'une partie d'un ensemble d'accélération selon l'invention, présentant notamment deux pédaliers et des moyens de transmission d'un signal desdits pédaliers à une unité de commande électronique.

L'invention concerne un dispositif d'accélération 1.

Ce dispositif d'accélération 1 est installé sur un véhicule.

Ce véhicule équipé du dispositif d'accélération comporte de manière connue un volant permettant de diriger ledit véhicule, ainsi qu'un système d'accélération et un moteur faisant avancer ledit véhicule. Ce système d'accélération du véhicule comporte aussi, de manière connue, un pédalier P1 destiné à être actionné avec un membre inférieur d'un utilisateur, par exemple un pied droit d'un utilisateur, et une unité de commande électronique ECU de l'accélération du moteur et donc du véhicule, comme décrit ci avant dans l'art antérieur.

Le pédalier P1, comme décrit ci avant dans l'art antérieur, comporte un support, une pédale d'appui au pied pivotant autour d'un arbre par rapport audit support, des moyens de rappel élastiques de ladite pédale à une position initiale sous la forme ici d'un ressort à boudin, et des moyens de détection de l'appui et de la position de la pédale d'appui au pied par rapport audit support.

Ce pédalier P1, comme décrit ci avant dans l'art antérieur, émet un signal sous la forme d'une tension électrique de l'ordre de quelques volts qui est transmis par des moyens de transmission dudit signal à une unité de commande électronique ECU du moteur.

Le dispositif d'accélération 1 comporte un pédalier 2 et des moyens de commande 3 dudit pédalier 2. Ce pédalier 2 est monté fixement par rapport au véhicule sur lequel le dispositif d'accélération est monté, préférentiellement dans un espace proche du volant, mais protégé de mouvements de pieds involontaires. Un utilisateur dudit dispositif 1 peut actionner ce pédalier 2 en utilisant un de ses membres supérieurs, notamment la main pour actionner ces moyens de commande 3 qui actionnent alors ledit pédalier 2.

En fait, ce pédalier 2 comporte un support identique à celui du pédalier P1 du véhicule, au moins une partie d'une pédale d'appui au pied pivotant autour d'un arbre par rapport audit support identique à celle du pédalier P1 du véhicule, et des moyens de détection de l'appui et de la position de la pédale d'appui au pied par rapport audit support identique à ceux du pédalier P1 du véhicule.

Ce pédalier 2 comporte aussi des moyens de rappel élastiques de ladite pédale à une position initiale, qui peuvent être identiques à ceux du pédalier P1 du véhicule, à la force de rappel près. Ici, ce pédalier 2 comporte des moyens de rappel élastiques sous la forme d'un ressort à boudin dont la raideur est inférieure de celle du ressort à boudin du pédalier P1 du véhicule, pour permettre un actionnement du pédalier du dispositif par un utilisateur utilisant un membre supérieur et non pas un membre inférieur.

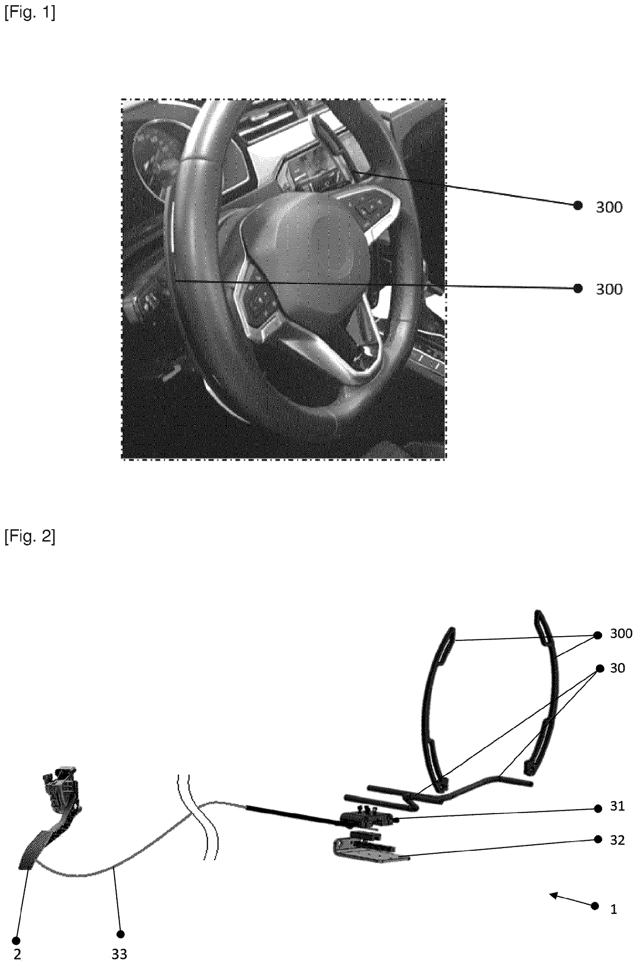

Les moyens de commande 3 sont ici des moyens de commande mécanique au volant, c'est-à-dire qu'ils sont ici installés derrière ledit volant du véhicule équipé du dispositif d'accélération 1, comme illustré sur la figure 1. Par les termes « moyens de commande mécanique au volant », on désigne des moyens de commande aptes à être montés sur un volant, ou derrière un volant. On définit les termes derrière ou dessous le volant selon une position d'utilisation du véhicule, en étant positionné sur le siège conducteur.

Ces moyens de commande 3 ici mécanique au volant se présentent sous la forme de deux tiges 30 s'étendant depuis un chariot 31 monté en translation par rapport à un guide linéaire à billes 32, ledit guide 32 étant monté solidairement et fixement au véhicule, sous le volant, notamment sur le carénage de la colonne de direction. Chaque tige 30 se poursuit perpendiculairement par une palette 300 en arc orientée vers le haut, derrière le volant. Le chariot 31 peut se déplacer en translation avant ou arrière par rapport au guide 32 entre deux butées, de manière à rapprocher ou reculer les palettes du volant depuis une position initiale contre le guide à une position maximale de rapprochement du volant. Des moyens de rappel élastiques sous la forme de ressorts ramènent le chariot 31 en position initiale en l'absence d'effort par un utilisateur destiné au rapprochement des palettes 300 du volant. Ces moyens de commande 3 comportent aussi un câble 33 en acier reliant le chariot 31 à la pédale du pédalier 2 du dispositif d'accélération 1, ce câble 33 présentant ici des moyens d'amortissement sous la forme ici d'une portion élastiquement déformable en étirement. Ce câble 33 permet de transmettre la course du chariot 31 audit pédalier 2 dudit dispositif 1, pour l'actionner. L'ensemble des pièces décrites dans ce paragraphe forment des moyens de transmission mécanique d'un effort exercé par un membre supérieur d'un utilisateur au pédalier 2 dudit dispositif 1.

Bien entendu, le dispositif peut être ajusté en fonction de l'utilisateur qui va conduire le véhicule en utilisant ces moyens de commande 3 au volant. Ainsi, la position d'accroche du câble 33 sur la pédale dudit pédalier 2 peut être modifiée, tout comme la raideur du ressort du pédalier 2.

On garantit ainsi un dosage de l'effort à appliquer au volant doux et progressif pour aider à la conduite.

Bien entendu, les palettes décrites ci avant peuvent être remplacées par un cercle comme décrit dans l'art antérieur. Les moyens de commande 3 du pédalier 2 peuvent aussi être montés sur le tableau de bord du véhicule, ou utiliser une manette contrôlant électriquement ou électroniquement des moyens de transmission mécanique d'un effort exercé par un membre supérieur d'un utilisateur au pédalier 2 dudit dispositif 1.

La pédale du pédalier 2 du dispositif 2 peut également être raccourcie pour ne conserver qu'une partie si elle est estimée trop longue au regard de la course attendue et de l'effort à appliquer pour l'actionner.

Ce dispositif d'accélération 1 est inclus dans un ensemble d'accélération dudit véhicule.

Cet ensemble d'accélération comporte le dispositif d'accélération 1 illustré sur la figure 1, mais aussi le pédalier P1 dudit véhicule, ainsi que des moyens de transmission 4 du signal des pédaliers 2, P1 à une unité de commande électronique ECU de l'accélération dudit véhicule, comme illustré sur la figure 2.

Ces moyens de transmission 4 du signal comportent un bloc commutateur 40 permettant de ne transmettre que le signal d'un pédalier à la fois à l'unité de commande électronique ECU. Ce bloc commutateur est à deux positions.

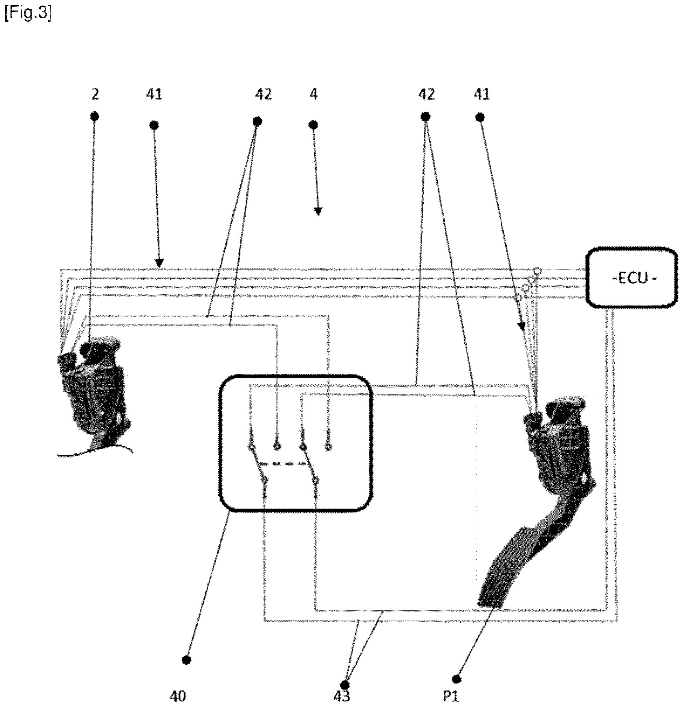

En fait, comme illustré sur la figure 3, les pédaliers 2, P1 sont reliés par des faisceaux 41 de fils à l'unité de commande électronique ECU de manière à pouvoir transmettre des signaux sous la forme de tensions fixes. Les pédaliers 2, P1 sont reliés aussi chacun par deux fils 42 au bloc commutateur 40, qui lui-même est relié par deux fils 43 à l'unité de commande électronique ECU, de manière à pouvoir transmettre le signal de uniquement un pédalier sous la forme d'une tension variable. Un exemple de configuration du bloc commutateur est illustré schématiquement sur la figure 3. Le bloc commutateur 40 peut être un bouton commutateur au niveau du tableau de bord, ce qui facilite le passage d'une première configuration selon laquelle l'accélération est commandée au pied, à une seconde configuration selon laquelle l'accélération est commandée à la main.

L'ensemble d'accélération est ainsi économique à réaliser, avec peu de pièce.

II suffit de commander auprès du constructeur un pédalier identique à celui monté sur le véhicule, puis de modifier les moyens de rappel élastiques de ce pédalier, de fixer le pédalier fixement au véhicule dans un espace proche du volant mais protégé de mouvements de pieds involontaires, et de relier le câble à la pédale de ce pédalier.

Ainsi les deux pédalier 2, P1 de l'ensemble d'accélération comportent des supports identiques, au moins une partie de pédales d'appui pivotant autour d'un arbre par rapport audit support identiques, et des moyens identiques de détection de l'appui et de la position de la pédale d'appui au pied par rapport audit support.

De plus, quelle que soit la configuration, on est assuré que l'unité de commande électronique ECU reçoive un signal lisible pour commander l'accélération. On évite ainsi tout problème de compatibilité entre le véhicule et le dispositif d'accélération 1.

Le véhicule comportant un tel ensemble d'accélération avec ce dispositif d'accélération 1 permet une conduite à la main confortable, avec des accélérations douces et régulières, facilitant les démarrages progressifs, fluidifiant la conduite à basse vitesse dans les courbes et les rond points, ainsi que sur les routes sinueuses ou accidentées. 1

## Revendications

1. Dispositif d'accélération (1) d'un véhicule équipé d'un système d'accélération comportant un pédalier (P1) destiné à être actionné avec un membre inférieur d'un utilisateur, **caractérisé par le fait que** ledit dispositif d'accélération (1) comporte un autre pédalier (2) et des moyens de commande (3) dudit pédalier (2) par un membre supérieur d'un utilisateur.

2. Dispositif d'accélération (1) selon la revendication 1, **caractérisé par le fait que** les moyens de commande (3) du dispositif d'accélération (1) sont des moyens de commande mécanique au volant.

3. Dispositif d'accélération (1) selon la revendication 2, **caractérisé par le fait que** les moyens de commande au volant comportent des moyens de transmission mécanique d'une course résultant d'un effort exercé par un membre supérieur d'un utilisateur au pédalier (2) dudit dispositif (1).

4. Dispositif d'accélération (1) selon la revendication 3, **caractérisé par le fait que** les moyens de transmission mécanique d'une course résultant d'un effort comportent un câble (33) comportant des moyens d'amortissement.

5. Ensemble d'accélération d'un véhicule équipé d'un système d'accélération comportant un pédalier (P1) destiné à être actionné avec un membre inférieur d'un utilisateur, **caractérisé par le fait que** ledit ensemble d'accélération comporte un dispositif d'accélération (1) selon l'une des revendications 1 à 4, ledit pédalier (P1) dudit véhicule, et des moyens de transmission (4) du signal des pédaliers (2, P1) à une unité de commande électronique de l'accélération (ECU) du système d'accélération dudit véhicule.

6. Ensemble d'accélération selon la revendication 5, **caractérisé par le fait que** les moyens de transmission (4) du signal des pédaliers (2, P1) comportent un bloc commutateur (40) configuré pour transmettre un signal d'uniquement un seul pédalier.

7. Ensemble d'accélération selon la revendication 5 ou la revendication 6, **caractérisé par le fait que** les deux pédaliers (2, P1) de l'ensemble d'accélération comportent des supports identiques, au moins une partie de pédales d'appui pivotant autour d'un arbre par rapport audit support identique, et des moyens identiques de détection de l'appui et de la position de la pédale d'appui au pied par rapport audit support.

8. Véhicule équipé d'un système d'accélération comportant un pédalier (P1) destiné à être actionné avec un membre inférieur d'un utilisateur, **caractérisé par le fait qu'**il comporte un ensemble d'accélération selon l'une des revendications 5 à 7.

## Patentansprüche

1. Beschleunigungsvorrichtung (1) eines Fahrzeugs, das mit einem Beschleunigungssystem ausgestattet ist, das ein Pedal (P1) umfasst, das dazu bestimmt ist, mit einer unteren Gliedmaße eines Benutzers betätigt zu werden, **dadurch gekennzeichnet, dass** die Beschleunigungsvorrichtung (1) ein weiteres Pedal (2) und Steuermittel (3) für das Pedal (2) durch eine obere Gliedmaße eines Benutzers umfasst.

2. Beschleunigungsvorrichtung (1) nach Anspruch 1, **dadurch gekennzeichnet, dass** die Steuermittel (3) der Beschleunigungsvorrichtung (1) mechanische Steuermittel am Lenkrad sind.

3. Beschleunigungsvorrichtung (1) nach Anspruch 2, **dadurch gekennzeichnet, dass** die Steuermittel am Lenkrads Mittel zur mechanischen Übertragung eines Hubs umfassen, der aus einem Kraftaufwand resultiert, der von einer oberen Gliedmaße eines Benutzers auf das Pedal (2) der Vorrichtung (1) ausgeübt wird.

4. Beschleunigungsvorrichtung (1) nach Anspruch 3, **dadurch gekennzeichnet, dass** die Mittel zur mechanischen Übertragung eines aus einem Kraftaufwand resultierenden Hubs ein Kabel (33) umfassen, das Dämpfungsmittel umfasst.

5. Beschleunigungsanordnung eines Fahrzeugs, das mit einem Beschleunigungssystem ausgestattet ist, das ein Pedal (P1) umfasst, das dazu bestimmt ist, mit einer unteren Gliedmaße eines Benutzers betätigt zu werden, **dadurch gekennzeichnet, dass** die Beschleunigungsanordnung eine Beschleunigungsvorrichtung (1) nach einem der Ansprüche 1 bis 4, das Pedal (P1) des Fahrzeugs und Mittel zur Übertragung (4) des Signals von den Pedalen (2, P1) an eine elektronische Beschleunigungssteuereinheit (ECU) des Beschleunigungssystems des Fahrzeugs umfasst.

6. Beschleunigungsanordnung nach Anspruch 5, **dadurch gekennzeichnet, dass** die Mittel zur Übertragung (4) des Signals von den Pedalen (2, P1) einen Schaltblock (40) umfassen, der dazu konfiguriert ist, ein Signal von nur einem Pedal zu übertragen.

7. Beschleunigungsanordnung nach Anspruch 5 oder Anspruch 6, **dadurch gekennzeichnet, dass** die beiden Pedale (2, P1) der Beschleunigungsanordnung identische Träger, wobei mindestens ein Teil der Stützpedale in Bezug auf den identischen Träger um eine Welle herum schwenkbar ist, und identische Mittel zur Erkennung der Abstützung und der Position des Stützpedals in Bezug auf den Träger umfassen.

8. Fahrzeug, das mit einem Beschleunigungssystem ausgestattet ist, das ein Pedal (P1) umfasst, das dazu bestimmt ist, mit einer unteren Gliedmaße eines Benutzers betätigt zu werden, **dadurch gekennzeichnet, dass** es eine Beschleunigungsanordnung nach einem der Ansprüche 5 bis 7 umfasst.

## Claims

1. A device (1) for accelerating a vehicle equipped with an acceleration system including a pedal assembly (P1) intended to be actuated with a lower limb of a user, **characterized in that** said acceleration device (1) includes another pedal assembly (2) and means (3) for controlling said pedal assembly (2) by an upper limb of a user.

2. The acceleration device (1) according to claim 1, **characterized in that** the control means (3) of the acceleration device (1) are mechanical control means on the steering wheel.

3. The acceleration device (1) according to claim 2, **characterized in that** the control means on the steering wheel includes means for mechanically transmitting a stroke resulting from a force exerted by an upper limb of a user to the pedal assembly (2) of said device (1).

4. The acceleration device (1) according to claim 3, **characterized in that** the means for mechanically transmitting a stroke resulting from a force include a cable (33) including damping means.

5. An assembly for accelerating a vehicle equipped with an acceleration system including a pedal assembly (P1) intended to be actuated with a lower limb of a user, **characterized in that** said acceleration assembly includes an acceleration device (1) according to one of claims 1 to 4, said pedal assembly (P1) of said vehicle, and means (4) for transmitting the signal of the pedal assemblies (2, P1) to an acceleration electronic control unit (ECU) of the acceleration system of said vehicle.

6. The acceleration assembly according to claim 5, **characterized in that** the means (4) for transmitting the signal of the pedals (2, P1) include a switch block (40) configured to transmit a signal from only one pedal assembly.

7. The acceleration assembly according to claim 5 or claim 6, **characterized in that** the two pedal assemblies (2, P1) of the acceleration assembly include identical supports, at least one portion of press pedals pivoting about a shaft relative to said identical support, and identical means for detecting the press and the position of the foot press pedal relative to said support.

8. A vehicle equipped with an acceleration system including a pedal assembly (P1) intended to be actuated with a lower limb of a user, **characterized in that** it includes an acceleration assembly according to one of claims 5 to 7.
